# EUROPEAN PATENT APPLICATION

(11) **EP 1 037 215 A1**
(43) Date of publication of application: **20.09.2000**
(21) Application number: 00400523.7
(22) Date of filing: 25.02.2000
(51) Int. Cl.: G21C 13/036, G21C 13/028

(54) **Dispositif de raccordement d'un tube guide de couvercle d'une cuve de réacteur nucléaire à eau sous pression**

(30) Priority: 15.03.1999 FR 9903168
(71) Applicant: Jeumont Industrie, 92400 Courbevoie (FR)
(72) Inventor: Gil, Dominique, 59131 Rousies (FR)
(74) Representative: Lanceplaine, Jean-Claude

(57) **Abrégé**

Le tube guide (3) comporte un corps cylindrique (3a) traversant le couvercle et une tête (3b) munie d'un filetage externe (3c). Le dispositif comprend, d'une part, un carter (20) adaptable sur la tête (3b) du tube guide (3) et muni de moyens (24) d'étanchéité avec ladite tête (3b) et, d'autre part, des moyens (40) de serrage indépendants du carter (20) et exerçant une force d'application de ce carter sur la tête du tube guide (3).

## Description

La présente invention a pour objet un dispositif de raccordement d'un tube guide de couvercle d'une cuve d'un réacteur nucléaire à eau sous pression.

Les réacteurs nucléaires à eau sous pression comportent généralement une cuve renfermant le coeur du réacteur qui est plongé dans l'eau sous pression de refroidissement du coeur du réacteur.

La cuve du réacteur, de forme générale cylindrique, comporte un couvercle de forme hémisphérique qui peut être rapporté sur sa partie supérieure.

Le couvercle est percé d'ouvertures au niveau de chacune desquelles est fixé par soudure, un tube guide de traversée également appelé adaptateur qui assure le passage et la commande de déplacement d'un prolongateur d'une grappe de contrôle de la réactivité du coeur ou un passage de traversée d'un moyen de mesure à l'intérieur du coeur, tel qu'une colonne de thermocouple ou qui permet le montage d'un bouchon d'obturation de ce tube guide pour l'introduction, après avoir retiré ce bouchon, de moyens d'inspection de l'intérieur de la cuve.

Les éléments constitués par les mécanismes de commande des grappes de contrôle, les colonnes de thermocouples et les bouchons de certains tubes guides font partie du circuit primaire, et sont soumis aux conditions de ce circuit primaire, c'est à dire aux conditions de l'eau pressurisée qui est à une température de l'ordre de 240°C et à une pression de 155 bars.

Chaque tube guide comporte un corps cylindrique traversant le couvercle de la cuve et une tête munie d'un filetage externe sur lequel est vissé l'élément correspondant ce qui permet de reprendre les efforts dus à la poussée hydraulique. L'étanchéité est assurée par un joint à lèvre mince prévu sur la tête de chaque tube guide et soudé sur l'élément correspondant vissé sur cette tête.

Lors du remplacement de l'un des éléments, comme par exemple un mécanisme de commande du déplacement d'une grappe de contrôle ou d'une colonne de thermocouple, le joint à lèvre est découpé et l'élément est dévissé de la tête du tube guide

Ensuite, lors du remontage d'un autre élément, la lèvre du joint est réusinée, l'élément de remplacement est vissé sur la tête du tube guide et le joint est de nouveau soudé.

Avant le remontage d'un élément définitif sur la tête du tube guide correspondant, un élément de remplacement comme par exemple un mécanisme de commande des grappes de contrôle ou une colonne de thermocouple est monté sur cette tête, le temps nécessaire au réusinage du joint à lèvre.

Cet élément de remplacement doit être fixé sur la tête du tube guide par un dispositif de raccordement qui présente toute les garanties d'étanchéité indispensables à ce type de matériel.

A cet effet, l'invention a pour objet un dispositif de raccordement sur un tube guide de couvercle d'une cuve de réacteur nucléaire à eau sous pression, ledit tube guide comportant un corps cylindrique traversant le couvercle et une tête munie d'un filetage externe, caractérisé en ce qu'il comprend, d'une part, un carter adaptable sur la tête du tube guide et muni de moyens d'étanchéité avec ladite tête et, d'autre part, des moyens de serrage indépendants du carter et exerçant une force d'application de ce carter sur la tête du tube guide.

Selon d'autres caractéristiques de l'invention :
- les moyens d'étanchéité sont formés par un joint d'étanchéité disposé dans un logement ménagé dans le fond du carter et appliqué contre la face supérieure de la tête du tube guide par les moyens de serrage,
- les moyens d'étanchéité sont formés par un joint d'étanchéité principal disposé dans un logement ménagé dans le fond du carter et par un joint d'étanchéité complémentaire disposé sur la face latérale de la tête du tube guide, le joint principal et le joint complémentaire étant appliqués respectivement contre la face supérieure et la face latérale de la tête dudit tube guide par les moyens de serrage,
- la profondeur du logement de réception du joint d'étanchéité est déterminée pour limiter l'écrasement de ce joint lors du montage du carter sur la tête du tube guide,
- les joints d'étanchéité sont des joints toriques métalliques,
- les moyens de serrage sont formés par une bride supérieure montée sur le carter et par une bride inférieure munie d'un filetage interne coopérant avec le filetage externe de la tête du tube guide, lesdites brides étant reliées entre elles par des organes de liaison,
- les moyens de serrage sont formés par une bride supérieure montée sur le carter et par une bride inférieure supportant deux demi-coquilles disposées autour du corps du tube guide au-dessous de la tête dudit tube guide, lesdites brides étant reliées entre elles par des organes de liaison,
- les organes de liaison sont formés par des éléments de vissage traversant chacun un orifice lisse ménagé dans la bride supérieure et dont l'extrémité filetée est vissée dans un orifice taraudé ménagé dans la bride inférieure,
- les organes de liaison sont formés par des éléments de vissage traversant chacun un orifice lisse ménagé dans la bride supérieure et un orifice lisse ménagé dans la bride inférieure, un écrou étant vissé sur l'extrémité filetée de chaque élément de vissage,
- des rondelles élastiques sont interposées entre la tête de chaque élément de vissage et le fond du lamage de l'orifice lisse de la bride supérieure,
- des rondelles élastiques sont interposées entre l'écrou de chaque élément de vissage et la bride inférieure,
- le dispositif comporte des moyens d'application du joint d'étanchéité complémentaire simultanément sur la face latérale de la tête du tube guide et sur la face inférieure du carter,
- les moyens d'application du joint d'étanchéité complémentaire comprennent une couronne disposée au-dessous du carter et maintenue appliquée contre la face inférieure dudit carter par des écrous vissés chacun sur un organe de vissage reliant les brides supérieure et inférieure,
- la couronne détermine avec la face latérale de la tête du tube guide et la face inférieure du carter un logement de forme triangulaire pour le joint d'étanchéité complémentaire.

D'autres caractéristiques et avantages de l'invention apparaîtront au cours la description qui va suivre, donnée à titre d'exemple et faite en référence aux dessins annexés, sur lesquels :
- la Fig. 1 est une vue schématique en coupe par un plan axial d'un tube guide de traversée du couvercle de la cuve d'un réacteur nucléaire à eau sous pression,
- la Fig. 2 est une vue en coupe axiale d'un premier mode de réalisation d'un dispositif de raccordement conforme à l'invention,
- la Fig. 3 est une vue en coupe selon la ligne 3-3 de la Fig. 2,
- la Fig. 4 est une vue en coupe selon la ligne 4-4 de la Fig. 2,
- la Fig. 5 est une vue en coupe axiale d'un second mode de réalisation du dispositif de raccordement conforme à l'invention,
- la Fig. 6 est une vue en coupe selon la ligne 6-6 de la Fig. 5,
- la Fig. 7 est une vue en coupe axiale d'un troisième mode de réalisation du dispositif de raccordement conforme à l'invention,
- la Fig. 8 est une vue schématique à plus grande échelle montrant les moyens d'étanchéité du dispositif de fermeture représenté à la Fig. 7,
- les Figs. 9 et 10 sont deux vues en coupe axiale de deux variantes des organes de liaison du dispositif de raccordement conforme à l'invention.

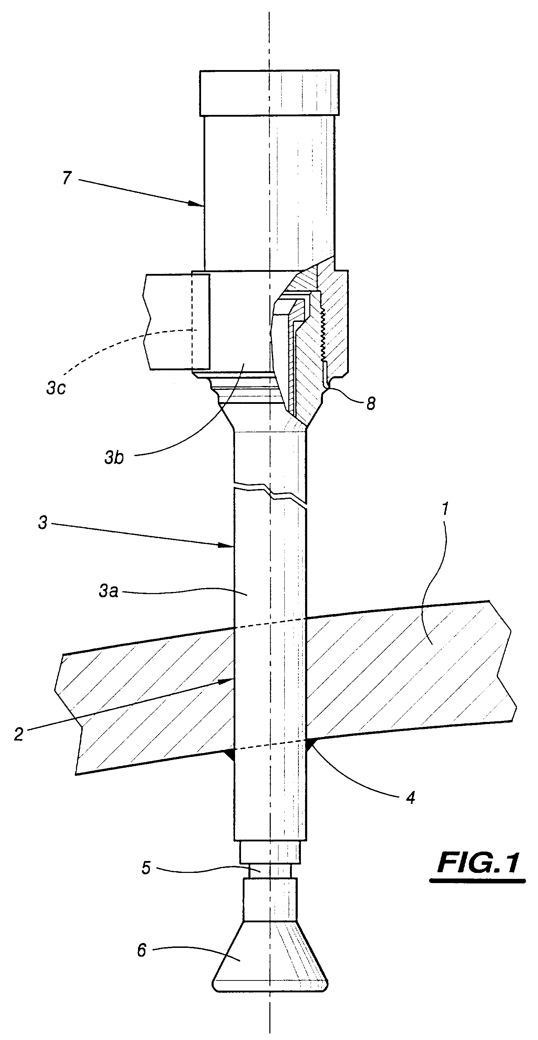

Sur la Fig. 1, on a représenté schématiquement une partie d'un couvercle 1 d'une cuve d'un réacteur nucléaire à eau sous pression.

Le couvercle 1 est traversé par des ouvertures 2 à l'intérieur de chacune desquelles est fixé un tube guide désigné dans son ensemble par la référence 3 et qui constitue un adaptateur permettant le passage d'un prolongateur assurant le déplacement d'une grappe de contrôle de la réactivité à l'intérieur de la cuve du réacteur nucléaire ou le passage d'une colonne de thermocouple ou le montage d'un bouchon d'obturation de ce tube guide 3 pour l'introduction, après avoir retiré ce bouchon, de moyens d'inspection de l'intérieur de la cuve.

Le tube guide 3 de forme générale tubulaire comporte un corps cylindrique 3a dont le diamètre correspond au diamètre de l'ouverture 2 et qui est fixé par un contour de soudure annulaire 4 sur la face interne inférieure du couvercle 1 de manière à se trouver saillant par rapport à cette face interne inférieure.

Le tube guide 3 comporte également une tête 3b de diamètre supérieur au corps cylindrique 3a, située à l'extérieur et au-dessus du couvercle 1.

Cette tête 3b est munie d'un filetage externe 3c.

Une manchette thermique 5 de forme tubulaire est disposée coaxialement à l'intérieur de l'alésage interne du tube guide 3 et comporte, dans l'exemple de réalisation représenté à la Fig. 1, une partie inférieure 6 de forme tronconique.

Le mécanisme de commande du déplacement du prolongateur d'une grappe de contrôle de la réactivité du coeur désigné par la référence générale 7 ou une colonne de thermocouple permettant de mesurer la température à l'intérieur de la cuve ou un bouchon d'obturation est fixé sur la tête 3b du tube guide 3 par vissage sur la partie filetée 3c et mis en appui sur un joint à lèvre 8 prévu sur la tête 3b dudit tube guide 3.

La fixation du mécanisme de commande ou de la colonne de thermocouple ou du bouchon d'obturation est complétée par un cordon du soudure d'étanchéité assurant la jonction entre le mécanisme et le tube guide 3 le long du joint à lèvre 8.

Dans le cas d'un remplacement du mécanisme de commande 7 ou de la colonne de thermocouple ou du bouchon d'obturation, le joint à lèvre 8 est découpé et ce mécanisme ou cette colonne de thermocouple est dévissé.

Pendant le temps nécessaire à l'usinage du joint à lèvre 8, un mécanisme de commande du déplacement du prolongateur d'une grappe de contrôle ou une colonne de thermocouple ou un bouchon d'obturation est monté sur la tête 3b du tube guide 3 au moyen d'un dispositif de raccordement conforme à l'invention et désigné dans son ensemble la référence 10.

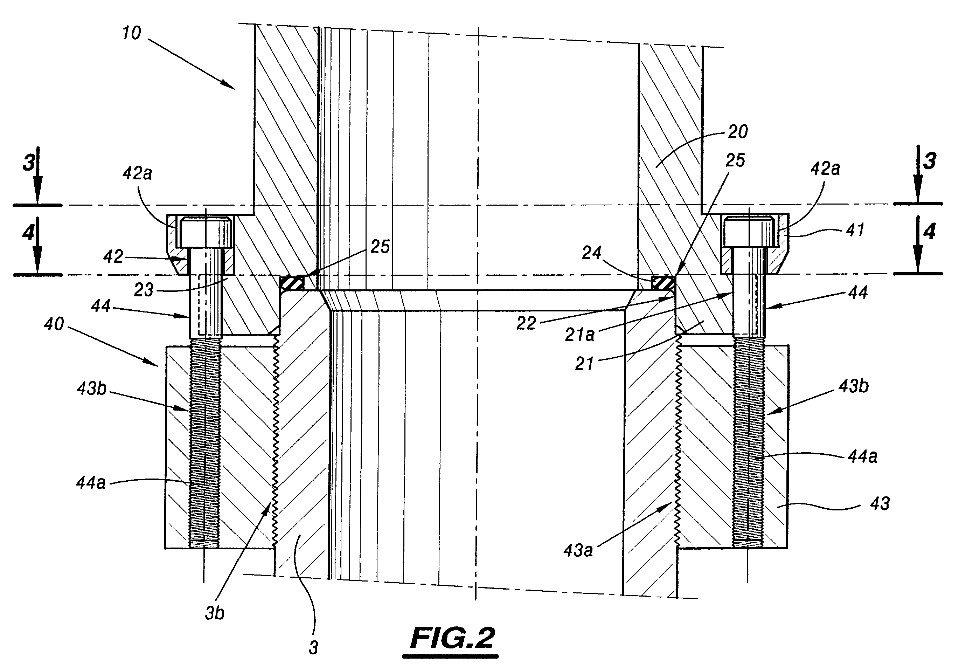

D'une manière générale, le dispositif de raccordement représenté sur les figures 2 à 8, comprend d'une part, un carter 20 adaptable sur la tête 3b du tube guide 3 et muni de moyens d'étanchéité avec ladite tête 3b et, d'autre part, des moyens 40 de serrage indépendants du carter 20 et exerçant une force d'application de ce carter 20 sur la tête 3b dudit tuce guide 3.

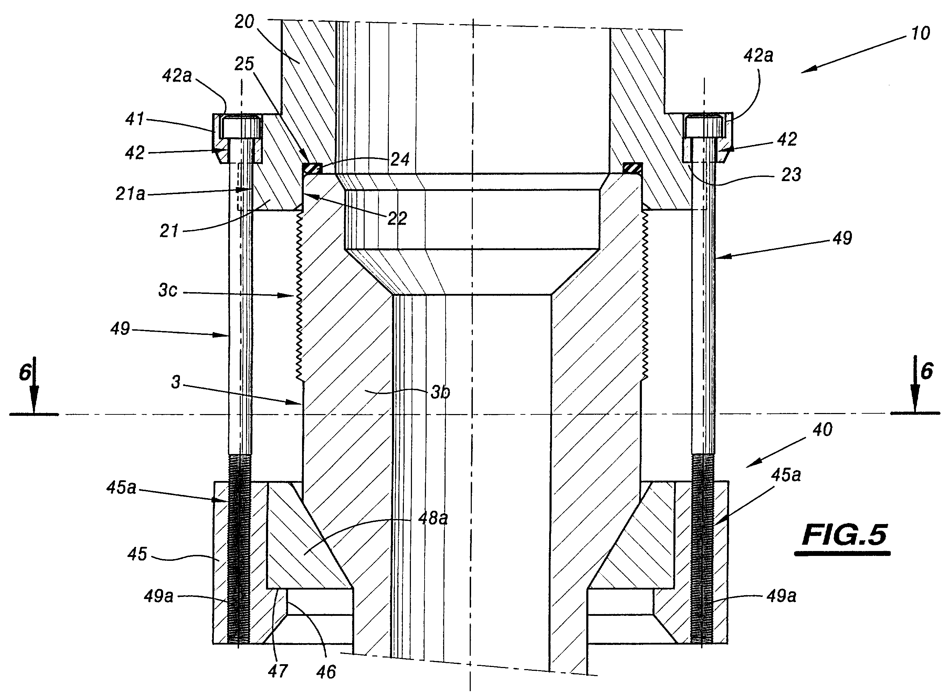

Selon les modes de réalisation représentés sur les Fig. 2 et 5, le carter 20 comporte un rebord périphérique 21 qui détermine, d'une part, un alésage 22 dont le diamètre correspond sensiblement au diamètre externe de la tête 3b du tube guide 3 et, d'autre part, un bord 23 formant un appui pour les moyens 40 de serrage, comme on le verra ultérieurement.

Ainsi que représenté sur les Fig. 2 et 5, le carter 20 est pourvu de moyens d'étanchéité avec la tête 3b du tube guide 3 et qui sont formés par un joint d'étanchéité 24 disposé dans un logement 25 ménagé dans le fond du carter 20. Le joint d'étanchéité 24 est appliqué contre la face supérieure de ladite tête 3b par les moyens 40 de serrage.

La profondeur du logement 25 de réception du joint d'étanchéité 24 est déterminée pour limiter l'écrasement de ce joint lors du montage du carter 20 sur la tête 3b du tube guide 3.

Le joint d'étanchéité 24 est formé par exemple par un joint torique métallique.

Selon un premier mode de réalisation représenté sur les Figs. 2 à 4, les moyens de serrage 40 du carter 20 sur la tête 3b du tube guide 3 comprennent une bride supérieure 41 montée sur le bord 23 du carter 20 et munie d'orifices lisses 42 uniformément répartis sur ladite bride supérieure 41.

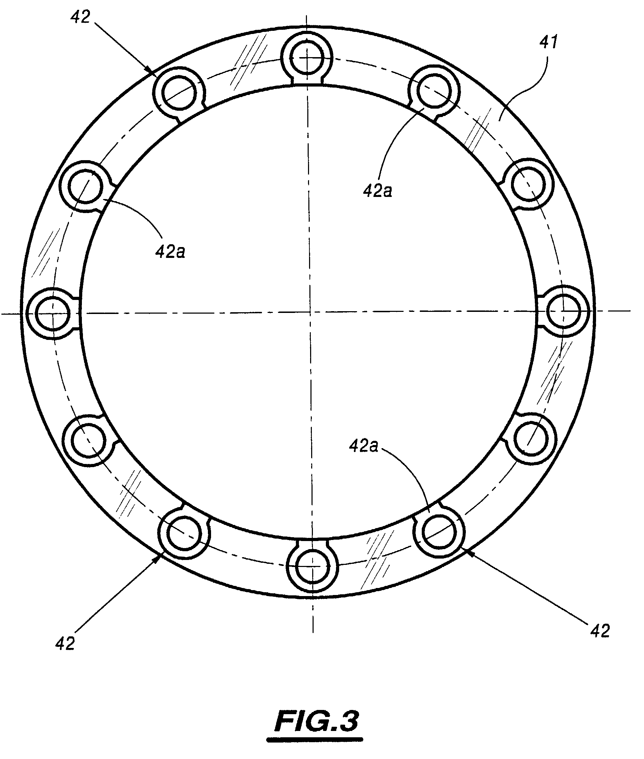

Chaque orifice 42 comporte une partie supérieure formée par lamage 42a débouchant à l'intérieur de ladite bride supérieure 41, comme représenté à la Fig. 3.

Les moyens de serrage 40 comportent également une bride inférieure 43 munie, d'une part, d'un filetage interne 43a coopérant avec le filetage externe 3c de la tête 3b du tube guide 3 et, d'autre part, d'orifices taraudés 43b.

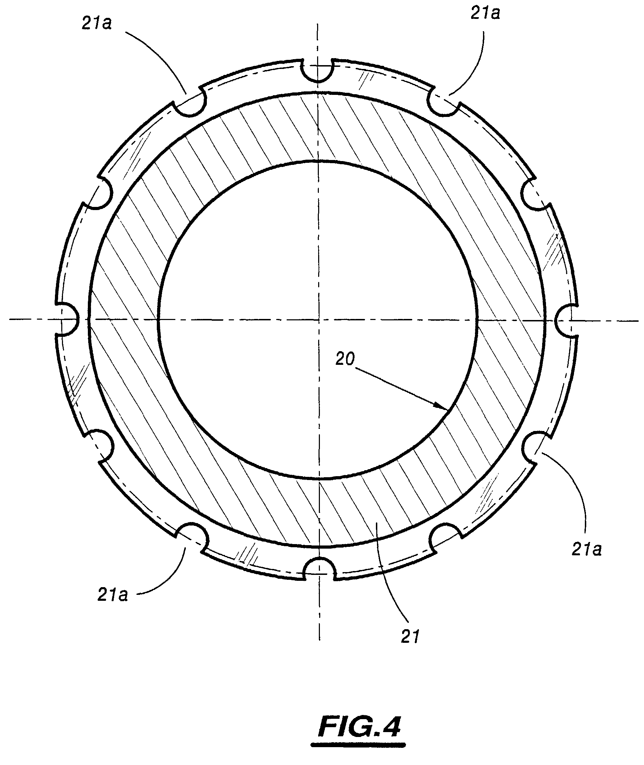

Par ailleurs, le rebord périphérique 21 du carter 20 comporte des lamages 21a débouchant vers l'extérieur dudit rebord périphérique et uniformément répartis, comme représenté à la Fig. 4.

Le nombre d'orifices taraudés 43b de la bride inférieure 43 est égale au nombre de lamages 21 ménagés sur le rebord périphérique 21 du carter 20 et au nombre d'orifices lisses 42 de la bride supérieure 41.

Les brides 41 et 43 sont reliées entre elles par des organes de liaison constitués par des éléments de vissage 44 qui sont montés chacun dans un orifice lisse 42 de la bride supérieure 41 et dont l'extrémité filetée 44a est vissée dans un orifice taraudé 43b de la bride inférieure 43.

Chaque élément de vissage 44 traverse également un lamage 21a du carter 20.

Le montage du carter 20 et des moyens de serrage 40 est réalisé de la façon suivante.

Tout d'abord, la bride inférieure 43 est vissée sur la partie filetée 3c de la tête 3b du tube guide 3 et le carter 20 muni du joint d'étanchéité 24 est posé sur ladite tête 20.

La bride supérieure 41 est montée sur le bord 21 du carter 20. Chaque élément de vissage 44 est monté dans un orifice lisse 42 de la bride supérieure 41, traverse un lamage 21a dudit carter 20 et est vissé dans un orifice taraudé 43b de la bride inférieure 43.

Le serrage de ces éléments de vissage 44 permet de comprimer le joint d'étanchéité 24 et d'exercer une force application du carter 20 sur la tête 3b du tube guide 3. L'écrasement de ce joint d'étanchéité 24 est limité par la profondeur du logement 25 de réception de ce joint d'étanchéité.

Dans ce mode de réalisation, la reprise des efforts lors du serrage des éléments de vissage 44 est réalisé sur la partie filetée 3c de la tête 3b du tube guide 3.

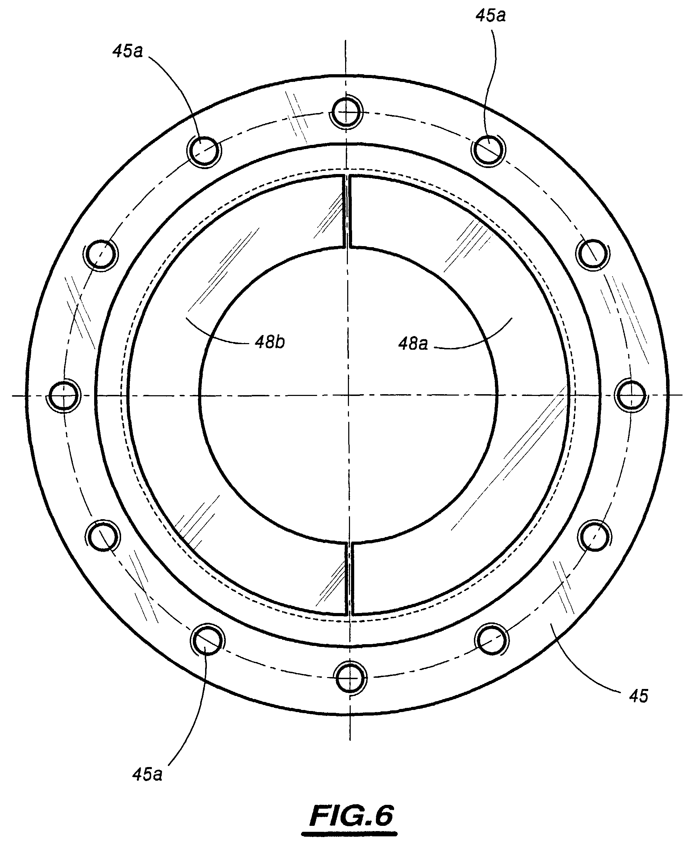

En se reportant maintenant aux Fig. 5 et 6, on va décrire un second mode de réalisation des moyens 40 de serrage du carter 20 sur la tête 3b du tube guide 3.

Dans ce mode de réalisation, le carter 20 est identique au carter du précédent mode de réalisation et comporte également un logement 25 de réception du joint d'étanchéité 24 ainsi qu'un rebord périphérique 21 muni de lamages 21a.

Les moyens 40 de serrage sont formés par une bride supérieure 41 munie d'orifices lisses 42 qui comportent chacun une partie supérieure formée par des lamages 42a débouchant vers l'intérieur de ladite couronne supérieure 41.

Les moyens de serrage 40 comportent également une bride inférieure 45 munie d'orifices taraudés 45a uniformément répartis et dont le nombre est égal au nombre d'orifices lisses 42 ménagés dans la bride supérieure 41.

Cette couronne inférieure 45 comporte un alésage interne 46 dont le diamètre est supérieur au diamètre externe de la tête 3b du tube guide 3.

De plus, la bride inférieure 45 comporte un rebord interne 47 formant une surface d'appui pour deux demi-coquilles, respectivement 48a et 48b (Fig. 6), disposées autour du corps 3a du tube guide 3 et au-dessous de la tête 3b dudit tube guide 3, ainsi que représenté à la Fig. 5.

Le profil interne de chaque demi-couronne 48a et 48b est de forme complémentaire au profil de la paroi de raccordement entre le corps 3a et la tête 3b du tube guide 3.

Les brides 41 et 45 sont reliées entre elles par des organes de liaison 49 constituées, par des éléments de vissage 49 montés chacun dans un orifice lisse 42 de la bride supérieure 41 et dont l'extrémité filetée 49a est vissée dans un orifice taraudé 45a de la bride inférieure 45.

Le montage des moyens de serrage 40 est, dans ce mode de réalisation, réalisé de la façon suivante.

Tout d'abord, la bride inférieure 45 est introduite sur le corps 3a du tube guide 3 et chaque demi-couronne 48a et 48b est placée sur le rebord interne 47 de la bride inférieure 45.

Ensuite, le carter 20 muni de joint d'étanchéité 24 est disposé sur la tête 3b du tube guide 3 et la bride supérieure 41 est montée sur le rebord périphérique 41 de ce carter 20.

L'ensemble constitué par la bride inférieure 45 et les deux demi-couronnes 48a et 48b est soulevé par des moyens appropriés pour que ces demi-couronnes 48a et 48b viennent s'appliquer au-dessous de la tête 3b du tube guide 3.

Chaque élément de vissage 49 est monté dans un orifice lisse 42 de la bride supérieure 41, traverse un lamage 21a du carter 20 et est vissé dans un orifice taraudé 45a de la bride inférieure 45.

Le vissage des éléments 49 permet d'exercer une force d'application du carter 20 sur la tête 3b du tube guide 3 et de comprimer le joint 24 pour assurer l'étanchéité. L'écrasement de ce joint 24 est limité par la profondeur du logement 25 de réception dudit joint.

Dans ce mode de réalisation, la reprise des efforts lors du serrage des éléments de vissage 49 est réalisée sur la partie conique de raccordement entre le corps 3a et la tête 3b du tube guide 3.

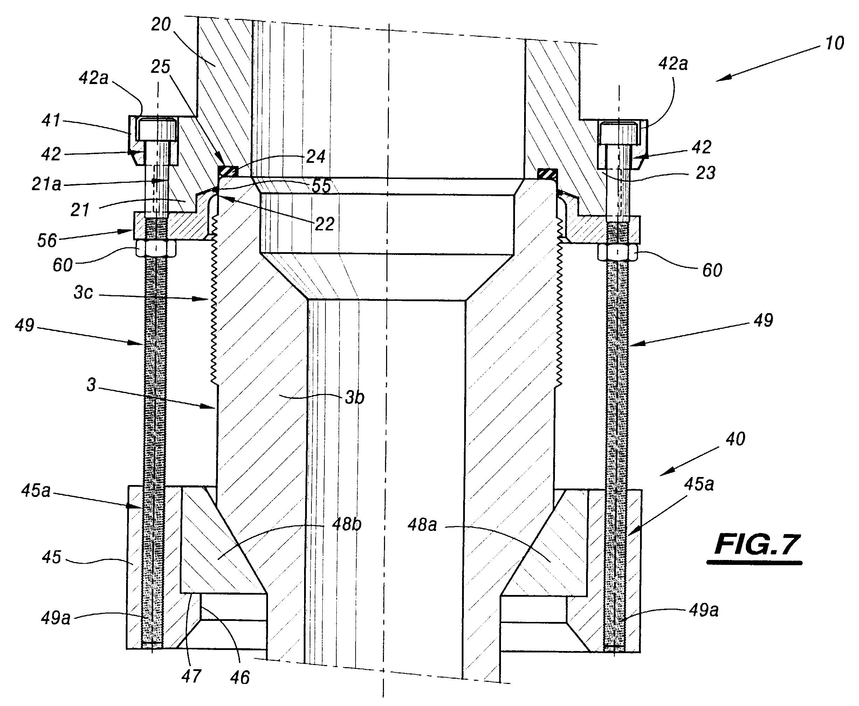

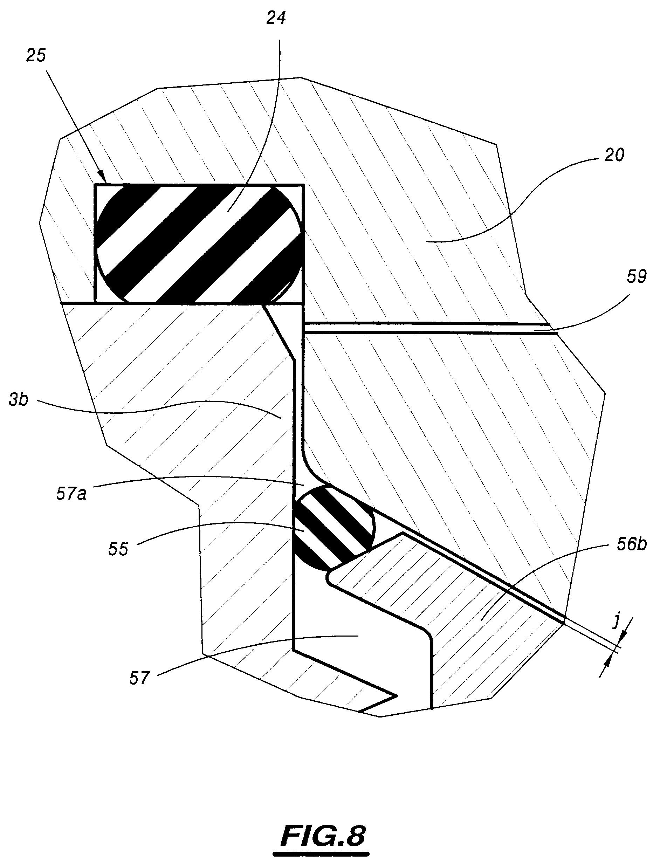

En se reportant maintenant aux Figs. 7 et 8, on va décrire un troisième mode de réalisation des moyens 40 de serrage du carter 20 sur la tête 3b du tube guide 3.

Dans ce mode de réalisation, le carter 20 est identique au carter des précédents modes de réalisation et comporte un joint d'étanchéité 24 et les moyens de serrage 40 sont identiques aux moyens de serrage du mode de réalisation représenté à la Fig. 5.

Les éléments communs aux précédents modes de réalisation sont désignés par les mêmes références.

Dans ce mode de réalisation, une étanchéité complémentaire à celle réalisée par le joint principal 24 est obtenue par un joint d'étanchéité complémentaire 55 disposé sur la face latérale de la tête 3b du tube guide 3.

Ce joint d'étanchéité complémentaire 55 est formé par exemple par un joint torique métallique.

Dans ce mode de réalisation, le joint principal 24 et le joint complémentaire 55 sont appliqués respectivement sur la face supérieure et la face latérale de la tête 3b du tube guide 3 par les moyens de serrage 40.

A cet effet, les moyens de serrage 40 sont associés à des moyens d'application du joint complémentaire 55 simultanément sur la face latérale de la tête 3b du tube guide 3 et sur la face inférieure du carter 20.

Ainsi que représenté sur les Figs. 7 et 8, les moyens d'application du joint secondaire 55 comprennent une couronne 56 disposée au-dessous du carter 20 et maintenue sur la face inférieure dudit carter par des écrous 60 vissés chacun sur un élément de vissage 49 reliant les brides supérieure 41 et inférieure 45.

Dans ce mode de réalisation, le rebord périphérique 21 du carter 20 ménage, avec la partie supérieure de la tête 3b du tube guide 3, un espace 57 dont le fond formé par la paroi inférieure du carter 20 est incliné et dans lequel est positionné le joint complémentaire 55.

La couronne 56 comporte une première partie 56a formant une bride destinée à être appliquée sur la face inférieure du carter 20 et une seconde partie 56b en forme de collet et inclinée vers l'axe du tube guide 3.

Cette seconde partie 56b pénètre dans l'espace 57 ménagé entre la tête 3b du tube guide 3 et le rebord périphérique 21 du carter 20.

Le collet 56b de la couronne 56 détermine avec la face latérale de la tête 3b du tube guide 3 et la face inférieure du carter 20, un logement 57a de forme triangulaire pour le joint d'étanchéité complémentaire 55.

Par ailleurs, après fixation de la couronne 56 au-dessous du carter 20 par les écrous 60, la face supérieure du collet 56b détermine avec la face inférieure du carter 20 un jeu "j" qui permet de comprimer le joint complémentaire 55 sur la face latérale de la tête 3b du tube guide 3 et, par conséquent, de réaliser une étanchéité complémentaire par rapport à celle déjà réalisée par le joint principal 24.

Comme représenté à la Fig. 8, un canal 59 est ménagé dans le rebord 21 du carter 20 pour pouvoir réaliser un contrôle de l'étanchéité des joints 24 et 55.

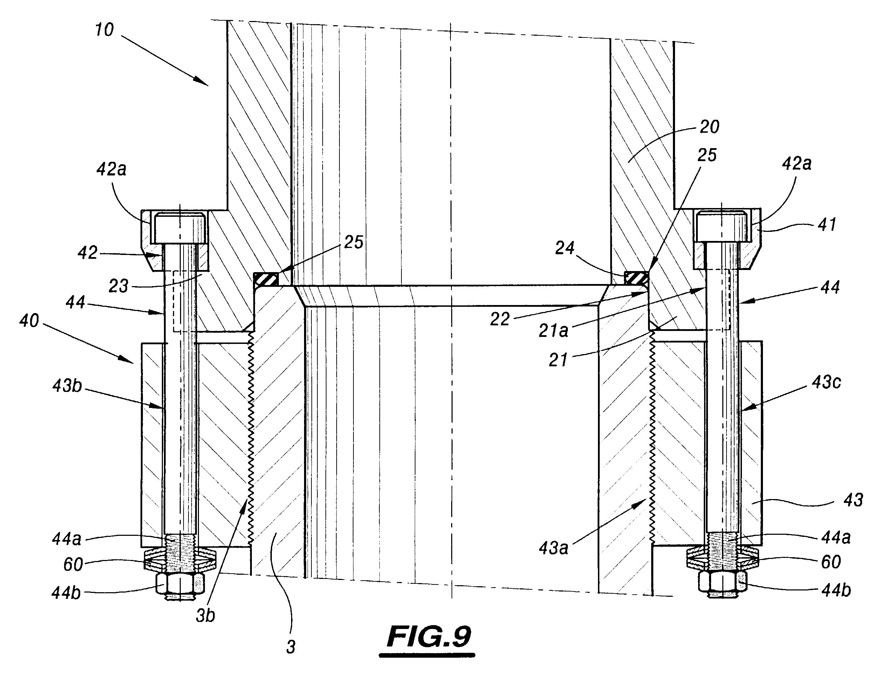

Selon une variante représenté à la Fig. 9, les organes de liaison sont formés par des éléments de vissage 44 traversant chacun un orifice lisse 42 ménagé dans la bride supérieure 41 et un orifice lisse 43c ménagé dans la bride inférieure 43. Un écrou 44b es vissé sur l'extrémité filetée 44a de chaque élément de vissage 44.

Des rondelles élastiques 60 sont interposées entre l'écrou 44b de chaque élément de vissage 44 et la bride inférieure 43.

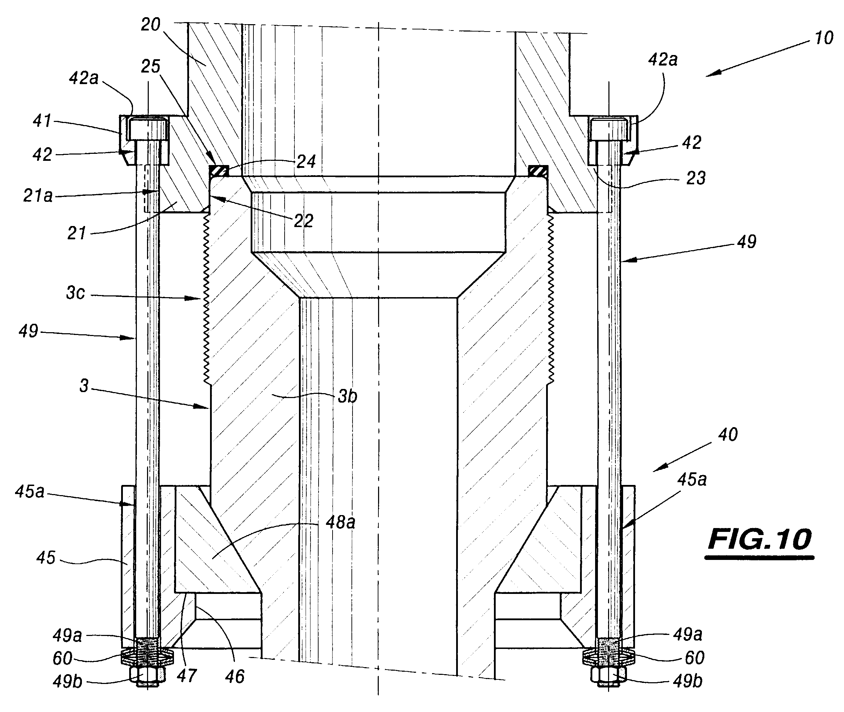

Selon une autre variante représentée à la Fig. 10, les organes de liaison sont formés par des éléments de vissage 49 traversant chacun un orifice lisse 42 ménagé dans la bride supérieure 41 et un orifice lisse 45b ménagé dans la bride inférieure 45. Un écrou 49b est vissé sur l'extrémité filetée 49a de chaque élément de vissage 49.

Des rondelles élastiques 60 sont interposées entre l'écrou 49b de chaque élément de vissage 49 et la bride inférieure 45.

Selon encore une autre variante, les rondelles élastiques 60 peuvent être interposées entre la tête de chaque élément de vissage 44 ou 49 et le fond du lamage 42a de l'orifice lisse 42 de la bride supérieure 41.

Les rondelles élastiques 60 permettent la reprise des dilatations différentielles entre les éléments de vissage et le corps du tube guide et également de pouvoir régler l'effort de serrage par le calcul de la hauteur de l'empilement de ces rondelles.

Dans les exemples de réalisation précédemment décrits, le carter 20 est formé par un carter d'un mécanisme de commande des grappes de contrôle ou d'une colonne de thermocouple de remplacement. Ce carter peut être constitué par un bouchon d'obturation.

Le dispositif de raccordement selon l'invention permet le montage d'un mécanisme de commande des grappes de contrôle ou d'une colonne de thermocouple ou d'un bouchon d'obturation de remplacement, le temps nécessaire au réusinage du joint à lèvre, et présente toutes les garanties d'étanchéité pendant cette période de remplacement.

## Revendications

1. Dispositif de raccordement sur un tube guide (3) de couvercle (1) d'une cuve de réacteur nucléaire à eau sous pression, ledit tube guide (3) comportant un corps cylindrique (3a) traversant le couvercle (1) et une tête (3b) munie d'un filetage externe (3c), caractérisé en ce qu'il comprend, d'une part, un carter (20) adaptable sur la tête (3b) du tube guide (3) et muni de moyens d'étanchéité (24 ; 55) avec la tête (3b) et, d'autre part, des moyens (40) de serrage indépendants du carter (20) et exerçant une force d'application de ce carter sur la tête (3b) du tube guide (3).

2. Dispositif selon la revendication 1, caractérisé en ce que les moyens d'étanchéité sont formés par un joint d'étanchéité (24) disposé dans un logement (25) ménagé dans le fond du carter (20) et appliqué contre la face supérieure de la tête (3b) du tube guide (3) par les moyens (40) de serrage.

3. Dispositif selon la revendication 1, caractérisé en ce que les moyens d'étanchéité sont formés par un joint d'étanchéité principal (24) disposé dans un logement (25) ménagé dans le fond du carter (20) et par un joint d'étanchéité complémentaire (55) disposé sur la face latérale de la tête (3b) du tube guide (3), le joint principal (24) et le joint complémentaire (55) étant appliqués respectivement contre la face supérieure et la face latérale de la tête (3b) dudit tube guide (3) par les moyens (40) de serrage.

4. Dispositif selon la revendication 2 ou 3? Caractérisé en ce que la profondeur du logement (25) de réception du joint d'étanchéité (24) est déterminée pour limiter l'écrasement de ce joint (24) lors du montage du carter (20) sur la tête (3b) du tube guide (3).

5. Dispositif selon l'une quelconque des revendications 2 à 4, caractérisé en ce que les joints d'étanchéité (24 ; 55) sont des joints toriques métalliques.

6. Dispositif selon les revendications 1 et 2, caractérisé en ce que les moyens (40) de serrage sont formés par une bride supérieure (41) montée sur le carter (20) et par une bride inférieure (43) munie d'un filetage interne (43a) coopérant avec le filetage externe (3c) de la tête (3b) du tube guide (3), lesdites brides (41, 43) étant reliées entre elles par des organes de liaison (44).

7. Dispositif selon l'une quelconque des revendications 1 à 3, caractérisé en ce que les moyens (40) de serrage sont formés par une bride supérieure (41) montée sur le carter (20) et par une bride inférieure (45) supportant deux demi-coquilles (48a, 48b) disposées autour du corps (3a) du tube guide (3) au-dessous de la tête (3b) dudit tube guide (3), lesdites brides (41, 45) étant reliées entre elles par des organes de liaison (49).

8. Dispositif selon la revendication 6 ou 7, caractérisé en ce que les organes de liaison sont formés par des éléments de vissage (44 ; 49) traversant chacun un orifice lisse (42) ménagé dans la bride supérieure (41) et dont l'extrémité filetée (44a ; 49a) est vissée dans un orifice taraudé (43b ; 45a) ménagé dans la bride inférieure (43 ; 45).

9. Dispositif selon la revendication 6 ou 7, caractérisé en ce que les organes de liaison sont formés par des éléments de vissage (44 ; 49) traversant chacun un orifice lisse (42) ménagé dans la bride supérieure (41) et un orifice lisse (43c ; 45b) ménagé dans la bride inférieure (43 ; 45), un écrou (44b ; 49b) étant vissé sur l'extrémité filetée (44a ; 49a) de chaque élément de vissage (44 ; 49).

10. Dispositif selon la revendication 8 ou 9, caractérisé en ce que des rondelles élastiques (60) sont interposées entre la tête de chaque élément de vissage (44 ; 49) et le fond du lamage (42a) de l'orifice lisse (42) de la bride supérieure (41).

11. Dispositif selon la revendication 9, caractérisé en ce que des rondelles élastiques (60) sont interposées entre l'écrou (44b ; 49b) de chaque élément de vissage (44 ; 49) et la bride inférieure (43 ; 45).

12. Dispositif selon les revendications 3 et 7, caractérisé en ce qu'il comporte des moyens (56, 60) d'application du joint complémentaire (55) simultanément sur la face latérale de la tête (3b) du tube guide (3) et sur la face inférieure du carter (20).

13. Dispositif selon la revendication 7, caractérisé en ce que les moyens d'application du joint secondaire (55) comprennent une couronne (56) disposée au-dessous du carter (20) et maintenue sur la face inférieure dudit carter (20) par des écrous (60) vissés chacun sur un organe de vissage (49) reliant les brides supérieure (41) et inférieure (45) .

14. Dispositif selon les revendications 12 et 13, caractérisé en ce que la couronne (56) détermine avec la face latérale de la tête (3b) du tube guide (3) et la face inférieure du carter (20) un logement (57a) de forme triangulaire pour le joint d'étanchéité complémentaire (55).
